# DEMANDE DE BREVET EUROPEEN

(11) **EP 2 062 494 A2**
(43) Date de publication de la demande: **27.05.2009**
(21) Numéro de dépôt: 08291085.2
(22) Date de dépôt: 19.11.2008
(51) Int. Cl.: A45C 7/00, A45C 5/02, A45C 3/04, B65D 65/46, B65F 1/00

(54) **Sac écologique destinée au transport de denrées**

(30) Priorité: 23.11.2007 FR 0708236
(71) Demandeur: Boudara, Martine, 92200 Neuilly S/Seine (FR)
(72) Inventeur: Boudara, Martine, 92200 Neuilly S/Seine (FR)

(57) **Abrégé**

Sac destiné au transport de denrées diverses caractérisé par une enveloppe pliable dotée de roulettes (3) encastrables dont la nature des matériaux est recyclable.

Le sac est composé d'un matériau souple (1) biodégradable, doté d'une doublure qui se replie sur des spirales plastiques ou métalliques (2) insérées dans la doublure.

## Description

La présente invention concerne un sac destiné aux transports des denrées diverses et notamment ménagères, dont les matériaux sont facilement détruits sans créer une pollution nuisible. Le sac objet de l'invention présente en outre des qualités de pliabilité suffisante pour avoir un petit volume lorsqu'il est vide, être doté d'éléments à billes qui facilitent sont déplacement lorsqu'il est garni, il est imperméable, et de manipulation ergonomique par l'utilisateur.

Ces sacs, chariots ou paniers de contenances voulues mis à la disposition du public sont généralement encombrants et plus ou moins adaptés aux acquisitions. Ils présentent vide une charge encombrante pour l'utilisateur.

La présente invention permet de résoudre ces inconvénients par une poche réalisée en matériaux doués de biodégradabilité permet un usage temporaire avec un rejet après un certain temps d'utilisation.

L'invention dénommée sac écologique destiné au transport de denrées et matériel est caractérisée par une poche (1) réalisée en plastique biodégradable, protégé intérieurement par une doublure gaufrée réalisée en matériau souple et imperméable, entre le sachet plastique extérieur et la doublure qui est renforcée par des tiges (2) glissées dans des sillons cousus constituant des ressorts.

Cette poche constituée de matériaux semi rigides est dotée de billes (3) serties sur les parois qui sert de fond lors du déplacement du sac.

Cette poche contenant le sac est fermée au moyen d'un dispositif d'encollage ou de fermeture à glissière (4).

L'invention sera mieux comprise grâce aux dessins annexés qui ne sont présentés qu'à titre d'exemple voulu par l'inventeur et choisi par celui-ci notamment en ce qui concerne les propriétés de biodégrabilité et de qualité physique.

La figure 1 de la planche 1/1 représente la poche (1) fermée par une fermeture et contenant le sac.

La figure 2 de la planche 1/1 représente la poche s'ouvrant à la manière d'un livre de poche afin de dégager le sac plié.

La figure 3 de la planche 1/1 représente le dispositif de sertissage de la bille (3) aidant le sac plein et déplié à se déplacer.

La figure 4 de la planche 1/1 représente vu en coupe la texture gaufrée de la doublure du sac.

La figure 5 de la planche 1/1 représente le sac déplié issu de sa poche dont la couverture ouverte constitue un fond (1) et tenue par les armatures (2).

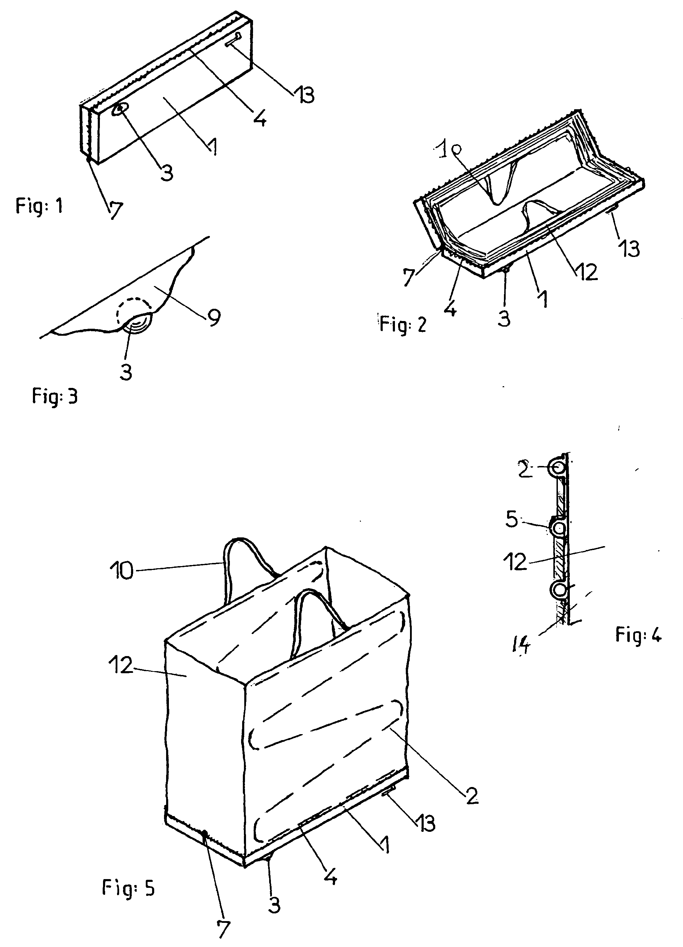

En se reportant à la figure 1 de la planche 1/1, o,n a dessiné la poche fermée constituée d'une enveloppe (1) à la fois biodégradable et semi rigide, s'ouvrant au moyen d'une charnière (7) et fermée par une fermeture à glissière (4).

Les parois intérieurs et extérieures de la poche qui constitue le fond du sac sont pourvues de crochets de soutien (13) et de roulettes (3) serties dans l'épaisseur du fond du sac.

La figure 2 de la planche 1/1 représente la poche (1) qui s'ouvre en deux éléments au moyen de la charnière (7) constituant un plancher où on accède au sac au moyen de poignées (10) solidaires du sac.

La paroi de la poche ouverte constitue le fond du sac que l'on déplace au moyen de roulettes (3) serties dans l'épaisseur (9) des parois gaufrées du sac.

Ce sertissage est visualisé en coupe sur la figure 3 de la planche 1/1.

La doublure du sac (12) est renforcée sur ses parois intérieures au moyen d'un gaufrage représenté à la figure 4 de la planche 1/1.

La doublure (5) de la protection est réalisée en matériaux biodégradables du type styrénique utilisés dans l'industrie alimentaire.

Les canaux (5) contenus dans la paroi gaufrée constituent un moyen destiné à glisser des tiges plastiques (2) qui épouse le profil en zig zag afin de constituer une armature verticale au sac.

On a représenté sur la figure 5 de la planche 1/1, l'ensemble du sac issu de sa poche (1) complètement déployé et utilisé comme réserve d'aliments ou de tout autre objet.

Les billes et les crochets sont facilement extraits du plancher du sac constituant la poche afin que lors de la destruction par l'effet de la biodégrabilité, ils ne constituent une source non destructible.

Le sac trouve son assise (1) sur la couverture de la poche ouverte.

Le sac est maintenu en place pendant l'achat par le client et est déplacé au moyen des billes (3) serties sous le plancher à l'extérieur.

Le sac lui-même est tiré vers le haut de la poche ouverte au moyen de poignées souples (10) fixées au niveau du sac intérieur, lui-même sera maintenu vertical au moyen des tiges en zig zag.

## Revendications

1. Sac écologique destiné au transport des denrées **caractérisé par** une poche (1) réalisée en plastique biodégradable, protégée intérieurement par une doublure gaufrée renforcée par des tiges (2) constituant une armature afin d'amener le sac contenu dans la poche à volume plat minimal pénétrant dans la poche.

2. Sac écologique destiné au transport des denrées selon la revendication 1 constitué d'une enveloppe (1) biodégradable et semi rigide s'ouvrant au moyen d'une charnière (7) fermée par une fermeture à glissière (4).

3. Sac écologique destiné au transport des denrées selon la revendication 1 **caractérisé en ce que** la poche (1) qui s'ouvre en deux éléments au moyen d'une charnière (7) constitué un plancher où on accède au sac (12) au moyen de poignées (10).

4. Sac écologique destiné au transport des denrées selon la revendication 1 **caractérisé en ce que** les parois de la poche (1) constitue le fond du sac que l'on déplace au moyen de roulettes (3) serties dans l'épaisseur (9) des parois de la poche.

5. Sac écologique destiné au transport des denrées selon la revendication I **caractérisé en ce que** le panneau gaufré est doté de canaux destinés à glisser des tiges plastiques (2) qui épousent le profil en zig zag afin de constituer une armature (2) verticale au sac.

6. Sac écologique destiné au transport des denrées selon la revendication I **caractérisé en ce que** le sac est tiré vers le haut de la poche au moyen de poignées souples (10) fixées au niveau intérieur, le sac étant maintenu vertical au moyen de tiges en zig zag.
